# EUROPÄISCHE PATENTSCHRIFT

(11) **EP 2 220 625 B1**
(45) Veröffentlichungstag und Bekanntmachung des Hinweises auf die Patenterteilung: **25.01.2012**
(21) Anmeldenummer: 08759068.3
(22) Anmeldetag: 06.06.2008
(51) Int. Cl.: G08B 25/08, G06F 21/00

(54) **VERFAHREN ZUR SICHEREN UND GEZIELTEN UNTERDRÜCKUNG VON ALARMEN IN EINER ÜBERWACHUNGS- UND STEUERUNGSZENTRALE**
METHOD FOR THE RELIABLE AND TARGETED SUPPRESSION OF ALARMS IN A MONITORING AND CONTROL CENTRE
PROCÉDÉ D'INHIBITION CERTAINE ET VOULUE D'ALARMES DANS UNE CENTRALE DE SUPERVISION ET DE COMMANDE

(30) Priorität: 17.12.2007 DE 102007061163
(43) Veröffentlichungstag der Anmeldung: 25.08.2010
(73) Patentinhaber: Deutsche Telekom AG, 53113 Bonn (DE)
(72) Erfinder: SCHRÖDER, Stefan, 53227 Bonn (DE); WEBER, Jens, 90451 Nürnberg (DE)
(86) Internationale Anmeldenummer: PCT/EP2008/004525
(87) Internationale Veröffentlichungsnummer: WO 2009/077014

(56) Entgegenhaltungen:
- FR-A- 2 582 429
- US-A- 4 090 182
- US-A- 6 057 764

## Beschreibung

Die vorliegende Erfindung betrifft ein Verfahren zur gezielten Unterdrückung eines Alarms durch Feststellung eines erlaubten bzw. unerlaubten Zugangs und/ oder Zutritts zu einer Zugangseinrichtung eines Telekommunikationsnetzes, insbesondere eines Mobilfunknetzes, in der die Zugangseinrichtung überwachenden Kontroll- und Steuerungszentrale auf der Grundlage von Alarmmeldungen, die durch das Öffnen der Zugangseinrichtung abgesetzt werden. Ferner betrifft die Erfindung ein System zur Anwendung des Verfahrens.

Die US 4,090,182 offenbart ein Verfahren zur Feststellung eines erlaubten oder unerlaubten Öffnens einer Zugangseinrichtung. Beim unerlaubten Öffnen wird dabei ein Alarm ausgelöst. Vor dem Öffnen kann von einer berechtigten Person eine Meldung in Gestalt eines kodierten Signals mittels eines Funkgerätes an eine lokale Überwachungseinrichtung übermittelt werden. Der Empfang der Meldung führt zu einer Alarmunterdrückung derart, dass kein Alarm abgesetzt wird. Die Überwachungseinrichtung wird dadurch unscharf geschaltet.

Die für den Betrieb eines Mobilfunknetzes notwendigen Zugangseinrichtungen wie beispielsweise Basisstationen, Verstärker- oder Repeater-Stationen stellen besonders sensible Einrichtungen dar, die Angriffspunkte unautorisierter Zugriffe auf das Mobilfunknetz und die darin ablaufende Telekommunikation sein können, die in den Mobilfunknetzen der zweiten und dritten Generation (2G und 3G Netze) längst nicht mehr nur Sprache sondern allgemeiner Austausch beliebiger Daten ist. Ein Zugriff stellt einen bedrohlichen Angriff dar, der sich beispielsweise in einem Abhören der Kommunikation, einem Einfügen oder Umleiten von Datenpaketen oder einer Datenverfälschung manifestieren kann. Während ein Abhören der Telekommunikation durch den Erhalt persönlicher Informationen einen Eingriff in die Privatssphäre darstellt, geht von Datenmanipulationen ein erheblich höheres Gefahrenpotenzial aus, insbesondere hinsichtlich der Abwicklung von Bestell- und Bezahlvorgängen, die mit mobilen Endgeräten für den Mobilfunk heutzutage zunehmend vorgenommen werden, und dem Abhören von Passwörtern durch phishing Websites (gefälschte Webseiten).

Durch die stetig wachsende Übertragung sensibler Informationen über Mobilfunknetze sind erhöhte Anforderungen an die Sicherung der Zugangspunkte zu dem Mobilfunknetz zu stellen. Umso bedrohlicher ist die Tatsache, dass die Verschlüsselung von Nutzdaten bei einigen Radiotechnologien in den Basisstationen vorgenommen wird und daher jegliche Kryptographie bezogenen Daten in den Basisstationen gespeichert werden. Die Basisstationen weisen kaum interne technische Sicherheit auf, um ein Eindringen zu verhindern. Sie sind in erster Linie durch vergleichsweise schwache mechanische Sicherheitsmaßnahmen geschützt (z.B. abgeschlossene Türen). Daher ist der Schutz der sensiblen Daten nicht gewährleistet und Angreifer können auf einfache Weise Zugriff auf die Stationen und das Mobilfunknetz erhalten, wenn sie den mechanisches Schutz überwunden haben. Ein Angriff kann dabei die Nutzdaten, jedoch auch andere Parameter betreffen und dabei gravierenden Schaden innerhalb des Netzwerks oder an weiteren Basisstationen anrichten. Die Überwachung der Zugangspunkte zu einem Mobilfunknetz hat daher enorme Bedeutung gewonnen.

Die Spezifizierung und Standardisierung der o.a. mechanischen Sicherheitsmaßnahmen ist nicht das Ziel der 3GPP (3rd Generation Partnership Project, eine weltweite Kooperation von Standardisierungsgremien, insbesondere für die Standardisierung von Netzen der 2. Generation (GSM, Global System for Mobile Communication) und 3. Generation (UMTS, Universal Mobile Telecommunication System)). Daher haben die Hersteller von Netzelementen oft proprietäre Maßnahmen ergriffen, die auf einer Überwachung der Türöffnung an der Zugangseinrichtung in den so genannten OMCs (Operation Maintenance Centers) basiert. Es sind Software bezogene Lösungen, die lediglich einen Beitrag zur Sicherung der Mobilfunknetz-Zugangseinrichtungen leisten.

Neben den obengenannten, durchaus möglichen unautorisierten feindlichen Zugriffen auf Zugangseinrichtungen von Telekommunikationsnetzen sind jedoch auch autorisierungsnotwendige Installations-, Reparatur- und Wartungsarbeiten an den Zugangseinrichtungen erforderlich, da es notwendig ist, in regelmäßigen Abständen den Austausch von Hardwarekomponenten und gegebenenfalls das Aufspielen aktueller Firmware oder in Störungsfällen Reparaturarbeiten vorzunehmen. Ein solcher technisch notwendiger Zugang oder Zugriff auf die Zugangseinrichtung, allgemein auch als Öffnen der Zugangseinrichtung bezeichnet, muss in der Praxis von dem unautorisierten feindlichen Zugriff unterschieden werden.

Es ist bekannt, Basisstationen von Mobilfunknetzen und andere Zugangseinrichtungen von Telekommunikationsnetzen, z.B. DSLAMs (Digital Subscriber Line Access Multiplexer, DSL-Teilnehmeraufschaltpunkte und Vermittlungsstellen), welche an nicht gesicherten Standorten stehen, mit Öffnungsüberwachungseinrichtungen auszurüsten. Diese Zugangseinrichtungen werden im Allgemeinen auch Base-Station Access Net (BS-AN) genannt. Das Öffnen einer entsprechend gesicherten BS-AN, d.h. das Verschaffen eines Zutritts zu den die sensible Hardware beherbergenden Räumlichkeiten der Zugangseinrichtung oder das Verschaffen eines Zugangs durch Öffnen eines Gehäuses, Schaltschranks oder durch direktes Anzapfen der Hardware, hat dann zur Folge, dass bei der für die Überwachung der BS-AN zuständigen Steuer- und Kontrollstelle (OMC, Operational Maintenance Center) eine Alarmmeldung in der Systemtechnik auftritt. Aufgrund unterschiedlicher Hersteller der gesicherten Komponenten, können auch mehrere Alarmmeldungen bei verschiedenen OMCs eingehen.

Zur Überprüfung und Auswertung, ob der Alarmmeldung ein erlaubter Zugriff zugrunde liegt, muss dieser vom Bedienpersonal des OMC ausgewertet werden. Dies erfolgt über den Abgleich mit den Dienstplänen der Vor-Ort-Einsätze. Kann der Alarmmeldung kein mit ihrem zeitlichen Auftreten korrelierender, in den Dienstplänen eingetragener Einsatz an der entsprechenden BS-AN zugeordnet werden, liegt der Verdacht eines unberechtigten Zugangs oder Zugriffs vor, und es sind geeignete Maßnahmen zu ergreifen um den potentiellen Angriff abzuwehren.

Das Erstellen der Dienstpläne und deren manueller Abgleich mit auftretenden Alarmmeldungen ist zeitaufwendig und mit vertretbarem Zeit- und Personenaufwand nicht zu leisten. Darüber hinaus erfordert der Abgleich Zeit, innerhalb derer bereits ein erheblicher Schaden durch den Angriff entstanden sein kann. Ein elektronischer Abgleich im Rahmen einer EDV gestützten Lösung ist ebenfalls ungeeignet, da die Dienstplanverwaltung in elektronischer Form erstellt und mit Schnittstellen zu vielen verschiedenen OMCs versehen werden muss.

Weiterhin ist das Erstellen vollständiger Dienstpläne im Voraus in der Praxis nicht möglich, weil Störungen und Ausfälle plötzlich und unerwartet, auch in Abhängigkeit mit Arbeiten an anderen BS-ANs oder Netzkomponenten auftreten können und schnelle und flexible Reparaturarbeiten und Einsätze erfordern.

Ferner ist zu beachten, dass selbst der Abgleich von Dienstplänen mit dem Auftreten einer Alarmmitteilung keine eindeutig sichere Aussage über einen berechtigten Zugriff auf eine BS-AN darstellt, da ein Dienstplan lediglich die Information über ein "im Laufe eines Tages" erfolgendes Öffnen einer bestimmten BS-AN enthält, und daher nur ungenaue Anhaltspunkte für die zulässige Öffnungszeit liefert. Insbesondere bleibt unklar, wann eine Öffnung erfolgt. Da eine unberechtigte Öffnung einer BS-AN unter Zuführung erheblichen Schadens mit langfristigen Auswirkungen auch nur kurzzeitig, d.h. im Laufe desjenigen Tages erfolgen kann, an dem Wartungs- oder Reparaturarbeiten an der entsprechenden BS-AN vorgesehen sind, blieben diese unbemerkt und es besteht die Gefahr, dass ein ausgelöster Alarm auch bei unberechtigter Öffnung der BS-AN unterdrückt wird. Wird einer Rechnung zugrunde gelegt, dass ein Techniker an einem Einsatztag durchschnittlich 10 BS-ANs öffnet, wären bei durchschnittlich 50 bundesweit im Einsatz befindlichen Technikern, unbemerkt Angriffe auf 500 Basisstationen möglich, trotz Dienstplanabgleich. Dies stellt ein unvertretbares und reduzierungsnotwendiges Sicherheitsrisiko dar.

Die Sicherheitsuntersuchungen an heutigen BS-ANs und OMCs haben gezeigt, dass eine Erhöhung des Sicherheitsstandards und Reduzierung des Sicherheitsrisikos zwingend erforderlich ist.

Der vorliegenden Erfindung liegt daher die Aufgabe zugrunde, den Arbeitsaufwand zur Feststellung, ob es sich bei dem einer erhaltenen Alarmmeldung zugrunde liegenden Öffnen einer Zugangseinrichtung um einen berechtigten oder unberechtigten Zugriff handelt, zeitlich und personell zu reduzieren und damit Kosten einzusparen, sowie das Sicherheitsrisiko durch schnelle und sichere Feststellung eines berechtigten oder unberechtigten Öffnens, einschließlich des Risikos, den Alarm für eine unberechtigte Öffnung unabsichtlich zu unterdrücken, zu minimieren.

Diese Aufgabe wird durch ein Verfahren mit den Merkmalen des Anspruchs 1 sowie mit einem System nach Anspruch 17 zur Anwendung des Verfahrens nach Anspruch 1 gelöst.

Erfindungsgemäß ist vorgesehen, zur gezielten Unterdrückung eines Alarms durch Feststellung eines erlaubten oder unerlaubten Zugangs und/ oder Zutritts zu einer Zugangseinrichtung eines Telekommunikationsnetzes, insbesondere eines Mobilfunknetzes oder eines Festnetzes, in der die Zugangseinrichtung überwachenden Kontrollzentrale auf der Grundlage von Alarmmeldungen, die durch das Öffnen der Zugangseinrichtung abgesetzt werden, zunächst jeweils vor dem Öffnen der Zugangseinrichtung mittels eines Meldegerätes eine Meldung an einen Meldeserver übermittelt wird. Der Techniker gibt damit der die Zugangseinrichtung überwachenden Steuer- und Kontrollzentrale (OMC) vor dem Öffnen an, dass er eine bestimmte Zugangseinrichtung öffnen, d.h. sich Zutritt oder Zugang zu den Zugriffspunkten des Telekommunikationsnetzes verschaffen will und wird. Die Übermittlung kann dabei unmittelbar an den Meldeserver oder mittelbar zunächst an eine Empfangseinrichtung erfolgen, welcher der Meldeserver zugeordnet ist.

Die Meldung umfasst dabei mindestens Informationen über die Identität des Meldenden und die Identität der Zugangseinrichtung. Ergänzend zu diesen Informationen kann die Meldung auch weitere Daten enthalten, beispielsweise über den genauen zeitlichen Beginn der Wartungs- oder Reparaturarbeiten oder die voraussichtliche Dauer oder das Ende der Arbeiten, so dass ein zeitliches Fenster definierbar ist, innerhalb dessen eine Alarmfilterung erfolgen soll.

Die Meldung kann in Form einer elektronischen Kurznachricht (SMS), einer Sprachmitteilung oder eines Webformulars erfolgen. Alternativ kann auch ein Verfahren mit Einzelworterkennung, beispielsweise IVR (Interactive Voice Response) zur Sprach-Interaktion Einsatz finden. Es sind jedoch auch andere Datenformate möglich.

Als Meldegerät kann ein mobiles Endgerät für den Mobilfunk, insbesondere ein Mobiltelefon, ein Smartphone oder eine Mobilfunkdatenkarte eines tragbaren Computers verwendet werden. Das Meldegerät entspricht dabei vorzugsweise dem 3GPP Sicherheitsstandard. Alternativ und/ oder in Ergänzung kann für den Fall eines lokalen Ausfalls des Mobilfunknetzes ein Meldegerät in der Zugangseinrichtung vorgesehen werden, über welches die Kontrollzentrale über das Öffnen der Zugangseinrichtung unterrichtet werden kann.

Die Übermittlung der Meldung kann über eine gesicherte Verbindung erfolgen, die insbesondere sicher gegen Abhören und Inhaltsveränderung ist, als auch einen Wiederholungsschutz (replay protection) aufweist. Damit wird auch bei der Übermittlung der Meldung ein hoher Sicherheitsstandard erreicht. Vorzugsweise kann als Meldegerät ein solches nach 3GPP- Standard verwendet werden, bei dem diese Sicherheitsmerkmale hinreichend gegeben sind. Alternativ oder zusätzlich kann eine Ende-zu-Ende Sicherheit zwischen Meldegerät und Meldeserver hergestellt werden.

Erfindungsgemäß ist vorgesehen, dass der Meldeserver eine Alarmunterdrückungsinformation erzeugen kann. Vorzugsweise wird diese in Abhängigkeit von der in der Meldung enthaltenen Daten, insbesondere nur dann erzeugt, wenn eine Verifikation der in der Meldung enthaltenen Daten mit positivem Ergebnis erfolgt ist. Die Verifikation kann dabei die Authentifizierung des Meldenden und/ oder der Zugangseinrichtung umfassen. Eine besonders sichere Authentifizierung des Meldenden kann vorzugsweise durch die SIM-Karte (Subscriber Identity Module) oder UICC (Universal/UMTS Integrated Circuit Card) des Meldegerätes, die jeweils zur Identifikation eines Mobilfunkteilnehmers im Netz dienen und/ oder durch die MSISDN (Mobile Subscriber ISDN Number) des Meldenden erfolgen. Die MSISDN stellt eine weltweit eindeutige Mobiltelefonnummer dar und wird aus dem Country Code (CC), dem National Destination Code (NDC) und der Subscriber Number (SN) gebildet. Alternativ oder in Kombination kann zur Authentifizierung auch eine dem Meldenden zugeordnete PIN verwendet werden. Ferner sind alternativ oder in Kombination mit den genannten Authentifizierungsverfahren weitere Verfahren möglich, die in der Sicherheitstechnik bekannt sind, beispielsweise Stimmenidentifikation oder Fingerabdruckprüfung. Weiterhin kann zusätzlich eine Authentifizierung der Zugangseinrichtung durch eine ihr zugeordnete Zugangseinrichtungskennung erfolgen.

Die Authentifizierung kann beispielsweise dann zu einem positiven Ergebnis führen , wenn die Person des Meldenden mit einem bekannten Techniker identifiziert werden kann oder wenn zusätzlich die Identität der Zugangseinrichtung mit einer tatsächlich existierenden und von der angerufenen OMC überwachten Zugangseinrichtung übereinstimmt.

Darüber hinaus kann die Verifikation alternativ oder ergänzend zur Authentifizierung eine Autorisierung des Meldenden umfassen. Bei dieser Autorisierung kann beispielsweise überprüft werden, ob der Meldende die zur Öffnung der gemeldeten Zugangseinrichtung notwendige Sicherheitsstufe bzw. allgemeine Zugangsberechtigung besitzt. Ferner kann zusätzlich überprüft werden, ob die Identität der Zugangseinrichtung zu einer Gruppe von Identitäten gehört, die zur Meldung nicht zugelassen sind bzw. deren Öffnung grundsätzlich eingeschränkt oder verboten ist, so dass in diesem Fall eine Autorisierung des Meldenden nicht erfolgt.

Ergänzend können bei der Authentifizierung oder Autorisierung zur Plausibilitätsprüfung Dienstplaninformationen verwendet werden. So kann beispielsweise überprüft werden, ob sich der Techniker, dessen Authentifizierung erfolgt ist, an dem entsprechenden Tag und/ oder in der Region, in der die Zugangseinrichtung steht, auch tatsächlich im Dienst befindet. Die Sicherheit kann damit zusätzlich erhöht werden.

Die Autorisierung kann beispielsweise dann zu einem positiven Ergebnis führen, wenn der Meldende die zur Öffnung der Zugangseinrichtung erforderlichen Zugangsrechte, insbesondere die notwendige Sicherheitsstufe und/ oder Zugangsberechtigung besitzt und die Zugangseinrichtung nicht zu einer Gruppe von Einrichtungen gehört, die grundsätzlich für jegliches Öffnen gesperrt ist. Weiterhin kann vorgesehen sein, dass die Autorisierung erst dann zu einem positiven Ergebnis führt, wenn die Plausibilitätsprüfung erfolgreich war. Die Autorisierung selbst kann beispielsweise dadurch erfolgen, dass die Identität des Meldenden, beispielsweise in Gestalt der MSISDN, in eine Tabelle berechtigter Meldender eingetragen wird.

Vorzugsweise kann eine positive Verifikation dann erfolgen, wenn eine positive Authentifizierung sowie eine positive Autorisierung erfolgt ist. Der Meldeserver erzeugt in diesem Fall eine Alarmunterdrückungsinformation. Diese kann erfindungsgemäß in ihrer zeitlichen Gültigkeit beschränkt sein.

Zur Erreichung eines hohen Maßes an Sicherheit, kann der Gültigkeitsbeginn der Alarmunterdrückungsinformation zeitlich vom Meldenden festgelegt werden, so dass die Alarmunterdrückungsinformation nicht bereits vom Zeitpunkt ihrer Erzeugung an gültig ist, was die Gefahr eines nicht erkennbaren unberechtigten Zugriffs birgt bis der Techniker vor Ort eingetroffen ist. Der Meldende kann daher angeben, wann er beabsichtigt die Zugangseinrichtung zu öffnen. Weiterhin kann der Gültigkeitszeitraum grundsätzlich beispielsweise seitens der Kontrollzentrale für alle Meldungen auf eine bestimmte zeitliche Länge, beispielsweise eine bis wenige Stunden beschränkt sein. Weiterhin kann der Zeitraum auch durch den Meldenden individuell und für jeden Einsatz festgelegt und vorzugsweise gleichzeitig mit der Meldung der Kontrollzentrale mitgeteilt werden. Dabei kann der Meldende beispielsweise einen bestimmten Gültigkeitszeitraum aus einer Gruppe fest vorgegebener Zeiträume wählen, einen Zeitraum individuell in Abhängigkeit der voraussichtlichen Dauer des Einsatzes vorgeben oder den Zeitpunkt des erwarteten Endes der Arbeiten an der Zugangseinrichtung mitteilen. Vorzugsweise kann der Meldende aus einer der genannten Möglichkeiten wählen.

Es empfiehlt sich ergänzend zu dieser Wahl des Meldenden stets eine zeitliche Gültigkeitsbeschränkung vorzusehen, damit in demjenigen Fall, in dem der Meldende vergisst, das Ende des Gültigkeitszeitraumes auszuwählen und mitzuteilen, keine Sicherheitslücke entsteht. In einer weiteren erfindungsgemäßen Ausführungsvariante kann das Ende der Gültigkeit auch von dem Meldenden unmittelbar nach dem Schließen der Zugangseinrichtung mitgeteilt werden, so dass der Alarm schnellstmöglich wieder scharf geschaltet werden kann. Damit wird die Alarmunterdrückungsinformation vorzeitig ungültig. Mit der Einschränkung der Gültigkeitsdauer kann verhindert werden, dass sich ein Angreifer nach dem Weggehen des Technikers Zutritt oder Zugriff auf die Zugangseinrichtung verschafft.

Durch die zeitliche Begrenzung der Gültigkeit wird erreicht, dass die Alarmunterdrückungsinformation nur so lange Gültigkeit besitzt, wie unbedingt erforderlich ist und das Risiko der Unterdrückung einer Alarmmeldung, die aufgrund eines unberechtigten Öffnens der Zugangseinrichtung abgesetzt worden ist, wird minimiert.

Alternativ oder kumulativ kann der Servicetechniker bei Beginn der Arbeiten vor Ort eine Alarmunterdrückungsinformation mit zeitlich unbegrenzter Gültigkeit senden, und diese zum Ende der Arbeiten wieder durch eine 2. Nachricht löschen, insbesondere kann die Alarmunterdrückungsinformation in dem Fall vorzeitig aufgehoben werden, wenn die zeitliche Begrenzung der Gültigkeit der Alarmunterdrückungsinformation noch nicht erreicht ist, die Arbeiten vor Ort jedoch bereits abgeschlossen sind.

Nach dem erfindungsgemäßen Verfahren ist die Alarmunterdrückungsinformation anschließend in einer Öffnungsüberwachungseinrichtung, die vorzugsweise innerhalb der Kontrollzentrale (OMC) angeordnet ist, auswertbar. Diese Auswertung erfolgt im Falle einer von einer Zugangseinrichtung abgesetzten Alarmmeldung. Diese wird mit den vom Meldeserver bisher aufgetretenen Alarmunterdrückungsinformationen verglichen, wobei im Falle einer positiven Zuordnung eine Filterung der Alarmmeldung erfolgt.

Bei dem Vergleich einer Alarmmeldung mit den Alarmunterdrückungsinformationen wird überprüft, ob für die die Alarmmeldung abgesetzte Zugangseinrichtung zu dem Zeitpunkt der Absetzung oder des Eingangs der Alarmmeldung in der Kontrollzentrale eine gültige Alarmunterdrückungsinformation vorliegt, d.h. die Alarmmeldung innerhalb desjenigen Zeitfensters aufgetreten ist, für den vor dem Öffnen der Zugangseinrichtung eine Autorisierung beantragt und erteilt worden ist. Ist dies der Fall, erfolgt eine positive Zuordnung der Alarmmeldung zu der entsprechenden Alarmunterdrückungsinformation. Dies drückt aus, dass es sich bei dem Öffnungsvorgang der Zugangseinrichtung mit hoher Wahrscheinlichkeit um einen erlaubten Zugang bzw. Zutritt handelt, so dass die abgesetzte Alarmmeldung unterdrückt werden kann.

Es wird weiterhin ein System vorgeschlagen, das zur Durchführung des erfindungsgemäßen Verfahrens eingerichtet ist und eine Feststellung eines erlaubten oder unerlaubten Zugangs und/ oder Zutritts zu einer Zugangseinrichtung eines Telekommunikationsnetzes, insbesondere eines Mobilfunknetzes, in der die Zugangseinrichtung überwachenden Kontrollzentrale auf der Grundlage von Alarmmeldungen erlaubt, die durch das Öffnen der Zugangseinrichtung abgesetzt werden.

Das System weist zumindest auf: eine Zugangseinrichtung eines Mobilfunknetzes, die dazu eingerichtet ist, zumindest eine Alarmmeldung im Falle ihres Öffnens abzusetzen, ein Meldegerät zur Übermittlung einer Meldung an einen Meldeserver, eine Kommunikationsverbindung zur Übermittelung der Meldung, einen Meldeserver, welcher dazu eingerichtet ist, in Abhängigkeit von der Meldung eine Alarmunterdrückungsinformation zu erzeugen, sowie eine Öffnungsüberwachung zur Auswertung von Alarmmeldungen und Alarmunterdrückungsinformationen, die dazu eingerichtet ist im Falle einer erhaltenen Alarmmeldung diese mit den vorliegenden Alarmunterdrückungsinformationen zu vergleichen und im Falle einer positiven Zuordnung die abgesetzte Alarmmeldung herauszufiltern.

Da das System zur Durchführung des erfindungsgemäßen Verfahrens eingerichtet ist, verfügt es über dieselben Merkmale, die bereits in Bezug auf das Verfahren erläutert worden sind. So kann das Meldegerät ein mobiles Endgerät für den Mobilfunk, insbesondere ein Mobiltelefon, Smartphone oder eine Mobilfunkdatenkarte eines tragbaren Computers sein. Weiterhin kann die Kommunikationsverbindung zwischen Meldegerät und Meldeserver gesichert sein, d.h. zumindest gegen Abhörung, Inhaltsveränderung und Datenwiederholung geschützt sein.

Es sei darauf hingewiesen, dass unter einem Meldeserver im Sinne dieser Erfindung jegliche technische Einrichtung verstanden wird, die dazu eingerichtet ist, eine Meldung zu erhalten und eine Alarmunterdrückungsinformation zu erzeugen. Der Meldeserver kann Teil der Öffnungsüberwachung der Kontrollzentrale sein, in einer alternativen Ausführungsvariante jedoch auch unabhängig von dieser ausgebildet sein, beispielsweise als zentraler Server, von dem aus Alarmunterdrückungsinformationen jeweils zu der die in der Meldung identifizierte Zugangseinrichtung überwachende Kontrollzentrale gesendet werden.

Der Meldeserver kann eine Einrichtung zur Verifikation, insbesondere zur Authentifizierung und/ oder Autorisierung aufweisen. Diese Authentifizierung und/ oder Autorisierung kann nach den bereits beschriebenen Verfahrensschritten ausgeführt werden.

Das Verfahren ist insbesondere zur Verwendung zum Schutz von Mobilfunknetzen vorgesehen, wobei die Zugangseinrichtungen in diesem Fall insbesondere Basisstationen des Mobilfunknetzes darstellen. Alternativ kann es jedoch auch für jedes beliebige Telekommunikationsnetz verwendet werden, beispielsweise Hochgeschwindigkeitsdatennetze für DSL, die sensible und schutzbedürftige Zugriffspunkte, beispielsweise DSLAMs aufweisen.

Optional kann das System eine Datenbank aufweisen, die mit dem Meldeserver oder der Öffnungsüberwachung verbunden ist und Dienstpläne über den Zugang und/ oder Zutritt zu den Zugangseinrichtungen beinhaltet. Diese Dienstpläne können bei der Verifikation berücksichtigt werden.

Weitere Vorteile und bevorzugte Ausgestaltungen der Erfindung können den Unteransprüchen entnommen werden.

Die Erfindung wird nachfolgend anhand eines konkreten Ausführungsbeispiels beschrieben.

In der Praxis sind regelmäßig Wartungsarbeiten und in Störungsfällen oder bei Ausfällen Reparaturarbeiten an Zugangseinrichtungen eines Telekommunikationsnetzes erforderlich. Im folgenden Beispiel wird auf eine Basisstation BS-AN (Base-Station Access Net) eines Mobilfunknetzes Bezug genommen und das Verfahren anhand dieser beispielhaften Zugangseinrichtung und beispielhaften Telekommunikationsnetzes beschrieben.

Ist es notwendig, dass sich ein Techniker Zutritt oder Zugang zu einer BS-AN verschaffen muss, allgemein als Öffnen der BS-AN bezeichnet, meldet er dies der für die Überwachung der BS-AN zuständigen Steuerungs- und Kontrollzentrale (Platform OMC). Dies kann auch kurzfristig erfolgen, d.h. während der Techniker bereits auf dem Weg zu einem Einsatzort ist, wobei in diesem Fall eine Eintragung des Einsatzes in einen Dienstplan nicht möglich ist.

Die Meldung erfolgt vorzugsweise in Form einer elektronischen Kurznachricht (SMS), einer Sprachnachricht oder auch in Gestalt eines Webformulars, die der Techniker mit Hilfe eines Mobiltelefons oder von einem tragbaren Computer absetzt, der mittels Mobilfunkdatenkarte eine gesicherte Verbindung mit einem Mobilfunknetz herstellen kann.

Die Meldung wird dabei vorzugsweise verschlüsselt über eine gesicherte Kommunikationsverbindung zur einem Meldeserver übertragen, der eine Alarmunterdrückungsinformation erzeugen kann, und beinhaltet mindestens Informationen über die Identität des Technikers und der zu öffnenden BS-AN. Letztere ist beispielsweise durch eine spezielle Kennung eindeutig identifizierbar. Zur Identifizierung des Meldenden kann dieser eine bestimmte PIN oder MSISDN verwenden, die er in der Meldung speziell angibt. Eine solche Nummer oder ein solcher Identifikationscode kann jedoch auch automatisch mit der Meldung durch die SIM-Karte oder UICC des Mobilfunkendgerätes als Identifikationseinrichtung versendet werden, wodurch das Mobilfunkendgerät im Mobilfunknetz und damit indirekt der Techniker eindeutig identifiziert ist.

Weiterhin kann der Techniker zusätzlich angeben, wann er mit seinen Arbeiten beginnen wird, d.h. wann eine erzeugte Alarmunterdrückungsinformation gültig werden soll. Ferner kann er zusätzlich angeben, wie lange seine Arbeiten, die eventuell mehrere Öffnungen und Schließungen umfassen können, dauern werden. Dies kann wahlweise durch Angabe einer zeitlichen Dauer der Arbeiten, z.B. 25 Minuten oder durch Angabe eines konkreten Zeitpunktes, zu dem die Arbeiten beendet sind, z.B. 15:15 Uhr. Ferner kann auch eine Auswahl aus einer Gruppe fester Gültigkeitszeiträume, z.B. 30 Minuten, 60 oder 90 Minuten usw., getroffen werden, die der Techniker in der Meldung angibt. Die Meldung kann z.B. von einer Nachbarfunkzelle erfolgen, wenn eine bestimmte BS-AN defekt ist und vor Ort keine Mobilfunkversorgung besteht. Eine vom Meldeserver erzeugte Alarmunterdrückungsinformation wird auf diese Weise in ihrer Gültigkeit zeitlich eingeschränkt.

Der Meldeserver, der vorzugsweise eine von einer Öffnungsüberwachung in der OMC unabhängige Einheit ist, zur Einwirkung auf diese jedoch mit der Öffnungsüberwachung verbunden ist, nimmt nach Erhalt einer Meldung eine Verifikation derselben vor. In einer weiteren Ausführungsvariante kann der Meldeserver auch Teil der Öffnungsüberwachung sein. Die Verifikation umfasst eine Authentifizierung des Melders anhand der übermittelten Identifikationsnummer (PIN) oder SIM-Karten- bzw. UICC-Kennung und der zu öffnenden BS-AN anhand ihrer Kennung. Es wird festgestellt, ob eine Identifizierung des Melders mit einem Techniker möglich ist. Kann die Identifikationsnummer oder SIM-Karten- bzw. UICC-Kennung einem Techniker zugeordnet werden und kann weiterhin die Kennung der BS-AN einer existierenden Basisstation zugeordnet werden, die von der angerufenen OMC tatsächlich überwacht wird, ist das Ergebnis der Authentifizierung positiv.

An die Authentifizierung schließt sich als nächster Verfahrensschritt eine Autorisierung an, die sich in der Eintragung der Identität des Melders, beispielsweise in Form seiner MSISDN, und daher des beabsichtigten Zugriffs in eine Tabelle darstellt. Im Rahmen der Autorisierung kann zusätzlich überprüft werden, ob der Techniker die für die Öffnung der gewünschten BS-AN notwendige Zugangsberechtigung oder Sicherheitsstufe besitzt und/ oder ob die BS-AN grundsätzlich für ein Öffnen freigegeben ist.

Ergänzend kann bei der Verifikation, d.h. bei der Authentifizierung oder Autorisierung zur Plausibilitätsprüfung ein Abgleich der Meldung mit Dienstplänen über die Techniker-Einsätze erfolgen, die von einer mit dem Meldeserver oder in dem Fall, dass der Meldeserver Teil der Öffnungsüberwachung ist, mit der Öffnungsüberwachung verbundenen Datenbank zur Verfügung gestellt werden. Auf diese Weise kann überprüft werden, ob der Techniker, der eine BS-AN öffnen möchte, zu dem entsprechenden Zeitpunkt tatsächlich im Dienst sein wird oder ob in der Meldung ein Betrugsversuch vorliegt.

Ist die Verifikation positiv, d.h. konnte sowohl eine Zuordnung der gemeldeten Identität des Melders zu einem Techniker als auch eine Zuordnung der BS-AN-Kennung zu einer von dem zuständigen OMC überwachten Basisstation erfolgen, sowie eine Autorisierung gegebenenfalls nach Berücksichtigung der Plausibilitätsprüfung vorgenommen werden, erzeugt der Meldeserver eine Alarmunterdrückungsinformation, die in dem vom Techniker angegebenen, ausgewählten oder systembedingt festgelegten Zeitfenster Gültigkeit besitzt.

Jede Alarmunterdrückungsinformation wird einer Öffnungsüberwachung des für die Überwachung der BS-AN zuständigen OMC zugeführt. Diese Öffnungsüberwachung erhält von allen überwachten BS-AN im Falle ihres Öffnens Alarmmeldungen und wertet sie unter Berücksichtigung vorliegender Alarmunterdrückungsinformationen aus. Diese Auswertung erfolgt dadurch, dass eine eingehende Alarmmeldung mit den für die BS-AN, welche die Alarmmeldung abgesetzt hat, vorliegenden Alarmunterdrückungsinformation verglichen wird. Liegt eine Alarmunterdrückungsinformation vor, die mit dem Zeitpunkt des Absetzens oder des Erhalts der Alarmmeldung korreliert und besitzt diese zu dem genannten Zeitpunkt schon oder noch Gültigkeit, liegt bei der BS-AN ein berechtigter Öffnungsvorgang vor, und die Alarmmeldung kann unterdrückt bzw. ignoriert werden.

Führt die Überprüfung, ob zu dem Zeitpunkt einer Alarmmeldung einer BS-AN eine gültige Alarmunterdrückungsinformation vorliegt, daher zu dem Ergebnis, dass der Alarmmeldung eine gültige Alarmunterdrückungsinformation zugeordnet werden kann, was im Sinne der Erfindung als positive Zuordnung bezeichnet wird, kann die Alarmmeldung von der Offnungsüberwachung unterdrückt oder herausgefiltert werden, da mit hinreichender Sicherheit feststeht, dass eine berechtigte Öffnung der BS-AN vorliegt. Die Öffnungsüberwachung kann daher auch als Alarmfilter bezeichnet werden.

In einer weiteren Ausführungsvariante kann die Öffnungsüberwachung auch Informationen beispielsweise über eingehende Alarmmeldungen oder Alarmunterdrückungsinformationen an ein zentrales OMC senden. Alternativ kann der Meldeserver die Alarmunterdrückungsinformationen auch an das zentrale OMC übermitteln, welches diese zentral verwaltet und die zuständigen Platform OMCs informiert.

## Patentansprüche

1. Verfahren zur Feststellung eines erlaubten oder unerlaubten Öffnens einer Zugangseinrichtung eines Telekommunikationsnetzes, insbesondere eines Mobilfunknetzes oder eines Festnetzes, in einer die Zugangseinrichtung überwachenden Kontrollzentrale auf der Grundlage von Alarmmeldungen, die durch das Öffnen der Zugangseinrichtung abgesetzt werden,
**dadurch gekennzeichnet, dass**
jeweils vor dem Öffnen der Zugangseinrichtung mittels eines Meldegerätes eine Meldung an einen Meldeserver übermittelt wird, welcher eine Alarmunterdrückungsinformation erzeugen kann, die in der Kontrollzentrale auswertbar ist, wobei im Falle einer erhaltenen Alarmmeldung diese mit den Alarmunterdrückungsinformationen verglichen wird und im Falle einer positiven Zuordnung eine Filterung der Alarmmeldung erfolgt.

2. Verfahren nach Anspruch 1, **dadurch gekennzeichnet, dass** als Meldegerät ein mobiles Endgerät für den Mobilfunk, insbesondere ein Mobiltelefon, Smartphone oder eine Mobilfunkdatenkarte eines tragbaren Computers verwendet wird.

3. Verfahren nach Anspruch 1 oder 2, **dadurch gekennzeichnet, dass** die Zugangseinrichtung eine Basisstation eines Mobilfunknetzes ist.

4. Verfahren nach Anspruch 1, 2 oder 3, **dadurch gekennzeichnet, dass** die Übermittlung der Meldung über eine gesicherte Verbindung erfolgt.

5. Verfahren nach einem der vorherigen Ansprüche, **dadurch gekennzeichnet, dass** die Meldung mindestens Informationen über die Identität des Meldenden und die Identität der Zugangseinrichtung beinhaltet.

6. Verfahren nach einem der vorherigen Ansprüche, **dadurch gekennzeichnet, dass** die Meldung in Gestalt einer elektronischen Nachricht, insbesondere Email, oder in Gestalt einer elektronischen Kurznachricht (SMS), einer Sprachmitteilung oder eines Webformulars erfolgt.

7. Verfahren nach einem der vorherigen Ansprüche, **dadurch gekennzeichnet, dass** die Alarmunterdrückungsinformation in Abhängigkeit von der Meldung, insbesondere nur nach positiver Verifikation der Meldung erzeugt wird.

8. Verfahren nach Anspruch 7, **dadurch gekennzeichnet, dass** die Verifikation eine Authentifizierung des Meldenden und/ oder der Zugangseinrichtung umfasst.

9. Verfahren nach einem der Ansprüche 7 oder 8, **dadurch gekennzeichnet, dass** die Verifikation eine Autorisierung des Meldenden umfasst.

10. Verfahren nach einem der vorherigen Ansprüche, **dadurch gekennzeichnet, dass** bei der Autorisierung zur Plausibilitätsprüfung Dienstplaninformationen berücksichtigt werden.

11. Verfahren nach einem der vorherigen Ansprüche, **dadurch gekennzeichnet, dass** die Alarmunterdrückungsinformation eine zeitlich beschränkte Gültigkeit besitzt.

12. Verfahren nach Anspruch 11, **dadurch gekennzeichnet, dass** der Anfang der Gültigkeit vom Meldenden festlegbar ist.

13. Verfahren nach Anspruch 11 oder 12, **dadurch gekennzeichnet, dass** das Ende der Gültigkeit festgelegt oder vom Meldenden festlegbar ist.

14. Verfahren nach Anspruch 13, **dadurch gekennzeichnet, dass** das Ende der Gültigkeit durch Angabe ihrer zeitlichen Dauer und/ oder durch Angabe des Zeitpunktes des Endes der Gültigkeit von dem Meldenden individuell festlegbar ist und mit der Meldung mitgeteilt wird und/ oder dass das Ende der Gültigkeit von dem Meldenden unmittelbar nach dem Schlißen der Zugangseinrichtung mitgeteilt wird.

15. Verfahren nach Anspruch 14, **dadurch gekennzeichnet, dass** zumindest zwischen der Angabe des Zeitpunktes des Endes der Gültigkeit und der Angabe einer zeitlichen Dauer der Gültigkeit gewählt werden kann.

16. Verfahren nach einem der vorherigen Ansprüche, **dadurch gekennzeichnet, dass** bei dem Vergleich einer Alarmmeldung mit den übermittelten Alarmunterdrückungsinformationen überprüft wird, ob für die Zugangseinrichtung zu dem Zeitpunkt der Absetzung oder des Erhalts der Alarmmeldung eine gültige Alarmunterdrückungsinformation vorliegt, wobei im Falle des Vorliegens einer gültigen Alarmunterdrückungsinformation eine positive Zuordnung der Alarmmeldung zu der Alarmunterdrückungsinformation erfolgt.

17. System zur Feststellung eines erlaubten oder unerlaubten Öffnens einer Zugangseinrichtung eines Telekommunikationsnetzes, insbesondere eines Mobilfunknetzes, in einer die Zugangseinrichtung überwachenden Kontrollzentrale auf der Grundlage von Alarmmeldungen, die durch das Öffnen der Zugangseinrichtung abgesetzt werden, **gekennzeichnet durch**
- eine Zugangseinrichtung eines Mobilfunknetzes, die dazu eingerichtet ist, zumindest eine Alarmmeldung im Falle ihres Öffnens abzusetzen,
- ein Meldegerät zur Übermittlung einer Meldung an einen Meldeserver,
- eine Kommunikationsverbindung zur Übermittlung der Meldung,
- einen Meldeserver, welcher dazu eingerichtet ist, eine Alarmunterdrückungsinformation zu erzeugen,
- eine Öffnungsüberwachung zur Auswertung von Alarmmeldungen und Alarmunterdrückungsinformationen, die dazu eingerichtet ist, im Falle einer erhaltenen Alarmmeldung diese mit den Alarmunterdrückungsinformationen zu vergleichen und im Falle einer positiven Zuordnung die abgesetzte Alarmmeldung herauszufiltern.

18. System nach Anspruch 17, **dadurch gekennzeichnet, dass** das Meldegerät ein mobiles Endgerät für den Mobilfunk, insbesondere ein Mobiltelefon, Smartphone oder eine Mobilfunkdatenkarte eines tragbaren Computers ist.

19. System nach Anspruch 17 oder 18, **dadurch gekennzeichnet, dass** der Meldeserver Teil der Öffnungsüberwachung ist.

20. System nach einem der Ansprüche 17 bis 19, **dadurch gekennzeichnet, dass** der Meldeserver eine Einrichtung zur Authentifizierung und/ oder Autorisierung des Meldenden aufweist.

21. System nach einem der Ansprüche 17 bis 20, **dadurch gekennzeichnet, dass** die Zugangseinrichtung eine Basisstation eines Mobilfunknetzes ist.

22. System nach einem der Ansprüche 17 bis 21, **gekennzeichnet durch** eine Datenbank, die mit dem Meldeserver oder der Öffnungsüberwachung verbunden ist und Dienstpläne über den Zugang und/ oder Zutritt zu den Zugangseinrichtungen beinhaltet.

## Claims

1. Method for detecting an authorised or unauthorised opening of an access device of a telecommunications network, in particular of a mobile radio network or a fixed network, in a control center monitoring the access device, based on alarm messages transmitted as a result of the access device being opened,
**characterised in that**,
in each case before the access device is opened, a message is sent to a signalling server by means of a signalling device, the signalling server being able to generate an alarm suppression information that can be analysed in the control center, wherein a received alarm message is compared with alarm suppression information and the alarm message is filtered in case of a positive assignment.

2. The method according to claim 1, **characterised in that** a mobile terminal for mobile radio communication, in particular a mobile telefone, a smartphone or a mobile radio data card for a portable computer, is used as the signalling device.

3. The method according to claim 1 or 2, **characterised in that** the access device is a base station of a mobile radio network.

4. The method according to claim 1, 2 or 3, **characterised in that** the transmission of the message is effected via a secure connection.

5. The method according to any one of the preceding claims, **characterised in that** the message contains at least information on the identity of the signalling party and on the identity of the access device.

6. The method according to any one of the preceding claims, **characterised in that** the message is transmitted in the form of an electronic message, in particular an e-mail, or in the form of an electronic short message (SMS), a voice message or a web form.

7. The method according to any one of the preceding claims, **characterised in that** the alarm suppression information is generated depending on the message, in particular only after positive verification of the message.

8. The method according to claim 7, **characterised in that** the verification comprises an authentification of the signalling party and/or of the access device.

9. The method according to any one of claims 7 or 8, **characterised in that** the verification comprises an authorisation of the signalling party.

10. The method according to any one of the preceding claims, **characterised in that**, during the authorisation, service schedule information is taken into account for the purpose of a plausibility check.

11. The method according to any one of the preceding claims, **characterised in that** the alarm suppression information has temporally limited validity only.

12. The method according to claim 11, **characterised in that** the begin of the validity can be determined by the signalling party.

13. The method according to claim 11 or 12, **characterised in that** the end of the validity is predefined, or can be defined by the signalling party.

14. The method according to claim 13, **characterised in that** the end of the validity can be indivually determined by the signalling party, by specifying its time duration and/or by specifying the time of the end of the validity, and communicated together with the message, and/or **in that** the end of the validity is communicated by the signalling party immediately after closing the access device.

15. The method according to claim 14, **characterised in that** a choice can be made at least between specifying the time of the end of the validity and specifying the time duration of the validity.

16. The method according to any one of the preceding claims, **characterised in that**, during the comparison of an alarm message with the transmitted alarm suppression information, a check is performed whether there is a valid alarm suppression information for the access device at the time of transmission or of reception of the alarm message, wherein a positive assignment of the alarm message to the alarm suppression information is effected in case a valid alarm suppression information is present.

17. A system for detecting an authorised or unauthorised opening of an access device of a telecommunications network, in particular of a mobile radio network, in a control center monitoring the access device, based on alarm reports transmitted as a result of the access device being opened, **characterised by**
- an access device of a mobile radio network adapted to transmit at least an alarm message in case it is opened,
- a signalling apparatus for transmitting a message to a signalling server,
- a communication link for transmitting the message,
- a signalling server adapted to generate an alarm suppression information,
- an opening monitoring means for analysing alarm messages and alarm suppression information, the means being adapted to compare, in case it has received an alarm message, the received message with alarm suppression information and to filter out the transmitted alarm message in case of a positive assignment.

18. The system according to claim 17, **characterised in that** the signalling apparatus is a mobile terminal for mobile radio communication, in particular a mobile telefone, a smartphone or a mobile radio data card for a portable computer.

19. The system according to claim 17 or 18, **characterised in that** the signalling server is part of the opening monitoring means.

20. The system according to any one of claims 17 to 19, **characterised in that** the signalling server comprises a device for the authentification and/or authorisation of the signalling party.

21. The system according to any one of claims 17 to 20, **characterised in that** the access device is a base station of a mobile radio network.

22. The system according to any one of claims 17 to 21, **characterised by** a database connected to the signalling server or the opening monitoring means and containing service schedules for the access and/or entrance to the access devices.

## Revendications

1. Procédé de détection d'une ouverture autorisée ou non autorisée d'un dispositif d'accès d'un réseau de télécommunication, notamment d'un réseau de radiocommunication mobile ou d'un réseau fixe, dans une centrale de contrôle supervisant le dispositif d'accès sur la base de messages d'alarme déclenchés par l'ouverture du dispositif d'accès,
**caractérisé en ce que**,
respectivement avant l'ouverture du dispositif d'accès, un message est transmis, par un dispositif de signalisation, à un serveur de signalisation apte à générer une information d'inhibition d'alarme pouvant être interprétée dans la centrale de contrôle, un message d'alarme reçu étant comparé avec les informations d'inhibition d'alarme et, en cas d'affectation positive, un filtrage du message d'alarme étant effectué.

2. Procédé selon la revendication 1, **caractérisé en ce qu'**un terminal mobile pour la radiocommunication mobile, notamment un téléphone mobile, un Smartphone ou une carte de données de radiocommunication mobile d'un ordinateur portable, est utilisé comme dispositif de signalisation.

3. Procédé selon l'une des revendications 1 ou 2, **caractérisé en ce que** le dispositif d'accès est une station de base d'un réseau de radiocommunication mobile.

4. Procédé selon l'une des revendications 1, 2 ou 3, **caractérisé en ce que** la transmission du message est effectuée par l'intermédiaire d'une connexion sécurisée.

5. Procédé selon l'une des revendications précédentes, **caractérisé en ce que** le message contient au moins des informations relatives à l'identité du signalant et à l'identité du dispositif d'accès.

6. Procédé selon l'une des revendications précédentes, **caractérisé en ce que** le message est effectué sous la forme d'un message électronique, notamment d'un courriel, ou sous la forme d'un message court électronique (SMS), d'un message vocal ou d'un formulaire web.

7. Procédé selon l'une des revendications précédentes, **caractérisé en ce que** l'information d'inhibition d'alarme est générée en fonction du message, notamment seulement après une vérification positive du message.

8. Procédé selon la revendication 7, **caractérisé en ce que** la vérification comprend une authentification du signalant et/ou du dispositif d'accès.

9. Procédé selon l'une des revendications 7 ou 8, **caractérisé en ce que** la vérification comprend une autorisation du signalant.

10. Procédé selon l'une des revendications précédentes, **caractérisé en ce que**, l'autorisation prend en compte des informations de plans de service pour le contrôle de vraisemblance.

11. Procédé selon l'une des revendications précédentes, **caractérisé en ce que** l'information d'inhibition d'alarme a une validité limitée dans le temps.

12. Procédé selon la revendication 11, **caractérisé en ce que** le début de la validité peut être défini par le signalant.

13. Procédé selon l'une des revendications 11 ou 12, **caractérisé en ce que** la fin de la validité est définie ou peut être définie par le signalant.

14. Procédé selon la revendication 13, **caractérisé en ce que** la fin de la validité peut être définie individuellement par le signalant en spécifiant la durée en temps et/ou en spécifiant le moment de la fin de la validité, et est communiquée avec le message, et/ou **en ce que** la fin de la validité est communiquée par le signalant immédiatement après la fermeture du dispositif d'accès.

15. Procédé selon la revendication 14, **caractérisé en ce qu'**il est possible de choisir au moins entre la spécification du moment de la fin de la validité et la spécification d'une durée de la validité en temps.

16. Procédé selon l'une des revendications précédentes, **caractérisé en ce que**, lors de la comparaison d'un message d'alarme avec les informations d'inhibition d'alarme transmises, il est verifié si, au moment du déclenchement ou de la réception du message d'alarme, une information d'inhibition d'alarme valide est présente pour le dispositif d'accès, une affectation positive du message d'alarme à l'information d'inhibition d'alarme étant effectuée en cas de présence d'une information d'inhibition d'alarme valide.

17. Système de détection d'une ouverture autorisée ou non autorisée d'un dispositif d'accès d'un réseau de télécommunication, notamment d'un réseau de radiocommunication mobile, dans une centrale de contrôle supervisant le dispositif d'accès sur la base de messages d'alarme déclenchés par l'ouverture du dispositif d'accès, **caractérisé par**
- un dispositif d'accès d'un réseau de radiocommunication mobile conçu pour déclencher au moins un message d'alarme s'il est ouvert,
- un dispositif de signalisation pour transmettre un message à un serveur de signalisation,
- une connexion de communication pour transmettre le message,
- un serveur de signalisation conçu pour générer une information d'inhibition d'alarme,
- un système de contrôle d'ouverture pour l'analyse des messages d'alarme et des informations d'inhibition d'alarme, conçu pour, s'il a reçu un message d'alarme, comparer ce message avec les informations d'inhibition d'alarme et, en cas d'affectation positive, filtrer le message d'alarme déclenché.

18. Système selon la revendication 17, **caractérisé en ce que** le dispositif de signalisation est un terminal mobile de radiocommunication mobile, notamment un téléphone mobile, un Smartphone ou une carte de données de radiocommunication mobile d'un ordinateur portable.

19. Système selon l'une des revendications 17 ou 18, **caractérisé en ce que** le serveur de signalisation fait partie du système de contrôle d'ouverture.

20. Système selon l'une des revendications 17 à 19, **caractérisé en ce que** le serveur de signalisation comporte un dispositif d'authentification et/ou d'autorisation du signalant.

21. Système selon l'une des revendications 17 à 20, **caractérisé en ce que** le dispositif d'accès est une station de base d'un réseau de radiocommunication mobile.

22. Système selon l'une des revendications 17 à 21, **caractérisé par** une base de données qui est reliée au serveur de signalisation ou au système de contrôle d'ouverture et qui contient des plans de service pour l'accès ou l'entrée aux dispositifs d'accès.
